**Europäisches Patentamt**

**European Patent Office**

**Office européen des brevets**

(19)

(11) Veröffentlichungsnummer: **0 033 108**
**B2**

(12) # NEUE EUROPÄISCHE PATENTSCHRIFT

(45) Veröffentlichungstag der neuen Patentschrift:
**22.03.89**

(51) Int. Cl.⁴: **C 01 B 33/32**

(21) Anmeldenummer: **81100351.6**

(22) Anmeldetag: **19.01.81**

(54) Verfahren zur hydrothermalen Herstellung von Natriumsilikatlösungen.

(30) Priorität: **26.01.80 DE 3002857**

(43) Veröffentlichungstag der Anmeldung:
**05.08.81 Patentblatt 81/31**

(45) Bekanntmachung des Hinweises auf die Patenterteilung:
**23.03.83 Patentblatt 83/12**

(45) Bekanntmachung des Hinweises auf die Entscheidung
über den Einspruch:
**22.03.89 Patentblatt 89/12**

(84) Benannte Vertragsstaaten:
**AT BE CH DE FR GB IT LI NL SE**

(56) Entgegenhaltungen:
**EP-A- 0 006 202**
**NL-C- 940 746**
**US-A- 1 719 038**
**US-A- 2 881 049**
**US-A- 2 988 423**

**Die Akte enthält technische Angaben, die nach dem
Eingang der Anmeldung eingereicht wurden und die
nicht in dieser Patentschrift enthalten sind.**

(73) Patentinhaber: **Henkel Kommanditgesellschaft auf
Aktien, Postfach 1100 Henkelstrasse 67,
D-4000 Düsseldorf-Holthausen (DE)**

(72) Erfinder: **v.Laufenberg, Jürgen, Dr., Scheidemann
Strasse 5, D-5657 Haan 1 (DE)**
Erfinder: **Novotny, Rudolf, Am Rittersberg 14,
D-4000 Düsseldorf 13 (DE)**

**Beschreibung**

Die Erfindung betrifft ein verbessertes Verfahren zur hydrothermalen Herstellung von Natriumsilikatlösungen unter Druck und bei erhöhten Temperaturen sowie nachfolgender Filtration.

Von den unter dem Namen Wasserglas bekannten Alkalimetallsilikatlösungen finden für technische Zwecke am häufigsten Natriumsilikatlösungen – gemeinhin als Natronwasserglas bezeichnet – Verwendung. Derartige Natronwassergläser weisen üblicherweise einen Feststoffgehalt von etwa 35 Gewichtsprozent sowie ein Gewichtsverhältnis $SiO_2 : Na_2O$ von 3,3 bis 3,4:1 auf. Die Herstellung solcher Natronwassergläser im technischen Massstab erfolgt im allgemeinen durch Zusammenschmelzen von Quarzsand und Soda in hierfür geeigneten Öfen bei Temperaturen im Bereich von 1400 bis 1500°C, wobei die Kieselsäure das $CO_2$ austreibt. Die beim Abkühlen erstarrende Schmelze – das sogenannte Stückenglas – wird anschliessend in einem weiteren Verfahrensschritt unter Anwendung von Druck und erhöhter Temperatur in Wasser gelöst und die erhaltene Lösung – je nach Qualitätsanforderungen – gegebenenfalls filtriert. Durch Vermischen solcher Lösungen mit Natronlauge lassen sich Natriumsilikatlösungen mit einem geringeren $SiO_2/Na_2O$-Gewichtsverhältnis gewinnen. Dieses Verfahren ist sowohl apparativ als auch hinsichtlich der erforderlichen Energiemengen sehr aufwendig und bedingt mithin relativ hohe Energie- und Anlagenkosten.

Eine weitere Möglichkeit zur Herstellung von Natronwassergläsern besteht in einem hydrothermalen Aufschluss von Sand mit Hilfe wässriger Natronlauge, gleichfalls unter Anwendung von Druck und erhöhten Temperaturen. Nach diesem Verfahren lassen sich jedoch nur Natriumsilikatlösungen mit einem Gewichtsverhältnis $SiO_2 : Na_2O$ von bis zu 2,8:1 gewinnen. Gebräuchliche Reaktionsbehälter für eine solche Hydrothermalsynthese sind zylindrische, mit einer Nikkelauskleidung versehene Eisenautoklaven, die im Hinblick auf eine ausreichende Durchmischung der Sand/Natronlauge-Suspension entweder um ihre horizontale Achse drehbar gelagert oder aber mit entsprechenden Rührwerken versehen sind. Als nachteilig erweist sich jedoch bei diesem Verfahren, dass bis zu einer vollständigen Umsetzung des eingesetzten Sandes – bei technisch sinnvollen, das heisst nicht zu hohen Temperaturen – sehr lange Reaktionszeiten in Kauf genommen werden müssen. Bei einer nur teilweisen Umsetzung des eingesetzten Sandes ergeben sich jedoch Probleme hinsichtlich der dann zur Abtrennung und Reinigung der gebildeten Natriumsilikatlösung erforderlichen Filtration, die bislang noch nicht zufriedenstellend gelöst werden konnten. Üblicherweise erfolgt die Filtrtion derartiger Wasserglaslösungen mit Hilfe von Anschwemmfiltern unter Druck sowie unter Verwendung von Filterhilfsmitteln. Dieses herkömmliche Filtrierverfahren weist jedoch einige wesentliche Nachteile auf, beispielsweise den Anfall hochalkalischer Filterrückstände, die nur als umweltbelastende Abfallprodukte in Deponien gelagert werden können, die erfoderliche Verwendung zusätzlicher Filterhilfsmittel, wie Kieselgur oder aufgearbeitetes Perlitgestein, Verluste an Natronwasserglas, das im Filterschlamm verbleibt, sowie die unerlässliche Aufbereitung der alkalischen Waschwässer. Die Anwendung höherer Temperaturen bei einem solchen Hydrothermalverfahren führt zwar einerseits zu verbesserten Raum/Zeit-Ausbeuten, bedingt jedoch andererseits einen weitaus höheren Energiebedarf.

In der BE-C-649 739 wird eine Hydrothermalsynthese zur Herstellung von Wasserglas beschrieben, wobei in Gegenwart eines Überschusses an Sand gearbeitet wird. Es wird ein Rührautoklav verwendet, der – in der Nähe des Reaktorbodens – Filtrierelemente aufweist. Gemäss dieser Patentschrift lassen sich die Schwierigkeiten bei der Aufbereitung des Reaktionsgemisches dadurch umgehen, dass das Reaktionsprodukt vom überschüssigen kieselsäurehaltigen Material und/oder von den unlöslichen verunreinigenden Stoffen mittels eben dieser Filtrierelemente abgetrennt wird. Diese Filtration erfolgt vorteilhafterweise unter ähnlichen Temperatur- und Druckbedingungen, wie sie auch bei der vorangegangenen Hydrothermalsynthese herrschen. Die Gesamtreaktionszeit – einschliesslich der für die Filtration benötigten Zeit – beträgt ca. 8 bis 9 Stunden.

In Chemical Abstracts, Vol. 92 (1980), Seite 120, 92 : 44 027t wird die niederländische Patentanmeldung 78 02 687 referiert. Hierbei handelt es sich gleichfalls um die Herstellung von Natriumsilikat-Lösungen aus Sand und Natriumhydroxid-Lösung. Als Reaktionsgefäss dient ein Rohrreaktor.

Das in der EP-A-0 006 202 beschriebene Verfahren betrifft die Herstellung von Wasserglaslösungen durch Umsetzung von Flugstäuben mit beispielsweise Natronlauge. Derartige Flugstäube bestehen zum grössten Teil aus amorphem Silicumdioxid, das durch Metalloxide und Kohlenstoff verunreinigt ist. Bei diesem Verfahren wird in üblichen Rührautoklaven gearbeitet.

In der Veröffentlichung des Vortrages «Application of the VAW Tube Digester of Metallurgical Pressure-Leaching Processes» anlässlich des «Annual Meeting of the American Institute of Mining and Metallurgical Engineers», Februar 1979, New Orleans, USA, wird u.a. über die Gewinnung von Wasserglas durch Auflösen von Sand in Natronlauge bei ca. 250°C mit Hilfe von VAW-Röhrenreaktoren berichtet.

«Ullmanns Encyklopädie der technischen Chemie», 3. Auflage (1964), Band 15, Seite 736 ist zu entnehmen, dass man Natriumsilikatlösungen durch hydrothermale Umsetzung von Natriumhydroxid-Lösungen und im Überschuss angewandten Sand herstellen kann.

Die Aufgabe der vorliegenden Erfindung ist es demgegenüber, ein Hydrothermalverfahren zur Herstellung von Natronwasserglas zu entwickeln, bei dem die Erzielung einer möglichst hohen Raum/Zeit-Ausbeute bei Anwendung vergleichsweise niedriger Temperaturen und somit einem möglichst geringen Energieaufwand angestrebt wird.

Gegenstand der Erfindung ist somit ein Verfahren zur hydrothermalen Herstellung von Natriumsilikatlösungen mit einem Gewichtsverhältnis $SiO_2:Na_2O$ von 1 bis 2,8:1 durch Umsetzung von Sand mit wässriger Natriumhydroxidlösung unter Druck und bei erhöhter Temperatur sowie nachfolgender Filtration, wobei man

a) wässrige Natriumhydroxidlösung einer Konzentration von 20 bis 30 Gew.-%

b) mit einem Überschuss an Sand von bis zu 300%, bezogen auf die Molverhältnisse von $SiO_2:Na_2O$ im Ansatz,

c) bei Temperaturen im Bereich von 170 bis 250 °C und den diesen Temperaturen entsprechenden Drücken von gesättigtem Wasserdampf

d) in einem rotierenden zylindrischen Druckbehälter, der um seine horizontale Achse drehbar gelagert ist, umsetzt und anschliessend

e) die gebildete, noch unter Druck stehende oder auf Normaldruck entspannte Natriumsilikatlösung auf ein Sandbettfilter ausserhalb des Reaktionsbehälters überführt und dabei

f) den nicht umgesetzten Sandüberschuss vollständig oder teilweise, gegebenenfalls im Gemisch mit überschüssigem Sand aus einer der vorangegangenen Umsetzungen oder frischem Sand, als Filtermedium verwendet,

g) die zu filtrierende, noch heisse Natriumsilikatlösung auf das Sandbettfilter aufgibt

h) und den zur Filtration verwendeten Sand anschliessend in das Verfahren zurückführt.

Überraschenderweise wurde nämlich gefunden, dass sich im Rahmen einer Hydrothermalsynthese unter den vorstehend angegebenen Bedingungen die erforderlichen Reaktionszeiten zur Herstellung von Natronwasserglas erheblich verkürzen lassen, wobei gleichzeitig geringere Reaktionstemperaturen und – in Verbindung damit – ein geringerer Energiebedarf erforderlich sind. Trotz dieser verkürzten Reaktionszeiten lässt sich bei Anwendung des erfindungsgemässen Verfahrens ein beträchtlicher Umsetzungsgrad der eingesetzten Reaktionskomponenten erzielen, der in einer relativ hohen $SiO_2$-Konzentration der gewonnenen Natriumsilikatlösungen zum Ausdruck kommt. Auf diese Weise ermöglicht es das erfindungsgemässe Verfahren insbesondere Natronwasserglaslösungen mit einem $SiO_2/Na_2O$-Gewichtsverhältnis im Bereich von 1 bis 2:1, wie sie in wachsendem Umfange zur Gewinnung von Metasilikaten beziehungsweise Dihydrogenorthosilikathydraten Bedeutung erlangen, in guten Ausbeuten herzustellen. Die vorstehend aufgezeigten Nachteile der herkömmlichen Verfahrensweise werden hierbei im wesentlichen einerseits durch einen beträchtlichen Überschuss der Reaktionskomponenten Sand sowie andererseits durch die Verwendung eben dieser überschüssigen, nicht umgesetzten Reaktionskomponenten als Filtermedium, in Verbindung mit der Durchführung der hydrothermalen Umsetzung in einem rotierenden, zylindrischen Druckbehälter, der um seine horizontale Achse drehbar gelagert ist, überwunden.

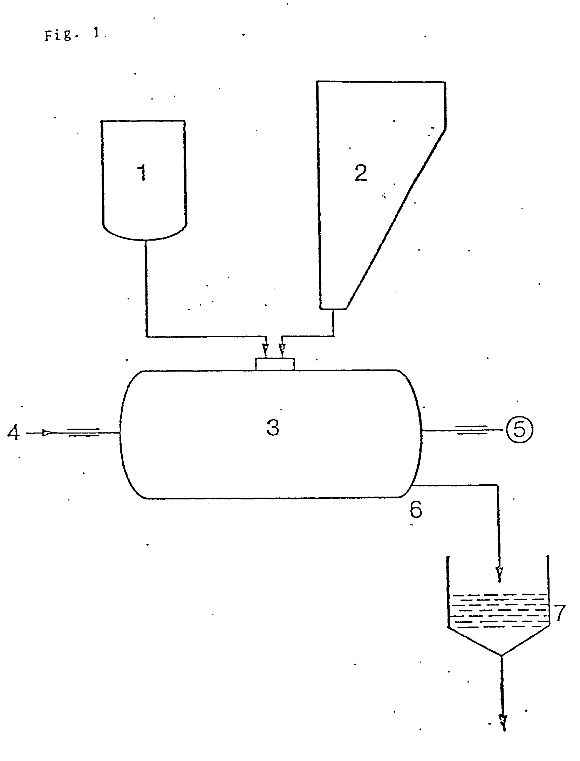

Abbildung 1 zeigt ein beispielhaftes Fliessschema für die Ausführung des erfindungsgemässen Verfahrens. Die hierin angegebenen Ziffern haben die nachstehende Bedeutung:

1) Vorratsbehälter für die wässrige Natronlauge
2) Vorratsbehälter für den Sand
3) Reaktionsbehälter
4) Zufuhr für gesättigten Wasserdampf
5) Antriebsmotor für den Reaktionsbehälter
6) Auslassöffnung für die gebildete Natriumsilikatlösung
7) Sandbettfilter

Sand und Natronlauge werden chargenweise – unter Berücksichtigung des erwünschten und erfindungsgemäss bedeutsamen Sandüberschusses – in den Reaktionsbehälter eingefüllt. Anschliessend wird die wässrige Sand/Natronlauge-Suspension im rotierenden Druckbehälter auf die gewünschte Reaktionstemperatur aufgeheizt. Dieses Aufheizen des Reaktionsgemisches kann sowohl indirekt – beispielsweise durch geeignete Heizelemente im Reaktionsbehälter oder Mantelbeheizung desselben – als auch direkt durch Einleiten von Wasserdampf in den Reaktionsbehälter – wie auch im Fliessschema beispielhaft dargestellt – erfolgen. Vorzugsweise wird dem Reaktionsgemisch gesättigter Wasserdampf bis zum Erreichen der erwünschten Reaktionstemperatur zugeführt, wobei sich gleichzeitig der dieser Temperatur entsprechende Druck des gesättigten Wasserdampfes im Reaktionsbehälter einstellt. Die nachstehende Tabelle zeigt hierzu beispielhaft einige Vergleichswerte zwischen Temperatur und Druck von gesättigtem Wasserdampf:

| Temperatur (°C) | Druck (bar) |
|---|---|
| 150 | 3,8 |
| 160 | 5,3 |
| 170 | 7,0 |
| 180 | 9,3 |
| 190 | 12,0 |
| 200 | 15,0 |
| 225 | 25,0 |

Das Reaktionsgemisch wird hierauf so lange unter den eingestellten Temperatur/Druck-Bedingungen in dem rotierenden Druckbehälter belassen, bis eine Probe der gebildeten Natronwasserglaslösung das Erreichen des erwünschten $SiO_2/Na_2O$-Gewichtsverhältnisses beziehungsweise der erwünschten $SiO_2$-Konzentration anzeigt. Die hierfür jeweils erforderlichen Reaktionszeiten lassen sich im allgemeinen im Verlauf einiger weniger Reaktionsabläufe empirisch ermitteln.

Anschliessend wird der rotierende Reaktionsbehälter angehalten und die noch unter Druck stehende oder auf Normaldruck entspannte Natriumsilikatlösung auf ein Sandbettfilter im Rahmen gebräuchlicher Filtrieraggregate überführt. Als Filtermedium für dieses Sandbett wird im Sinne der Erfindung der bereits zur Umsetzung verwendete, überschüssige Sand aus der beendeten Hydrothermalsynthese, gegebenenfalls im Gemisch mit überschüssigem Sand aus einer der vorangegangenen chargenweisen Umsetzungen oder frischem Sand, eingesetzt. Zur Bereitung des Sandbettes wird der sich nach Anhalten des Reaktionsbehälters am Boden absetzende überschüssige Sand zuerst auf das Filterbett übertragen; der gegebenenfalls noch im Reaktionsbehälter verbliebene Sand wird entweder für die nachfolgende Umsetzung in diesem belassen oder aber zur Bereitung des Sandbettfilters für eine der nachfolgenden Chargen verwendet.

Das Sandbett wird mit Vorteil vor dem Aufbringen der zu filtrierenden Natriumsilikatlösung durch eine von unten anströmende, im Kreislauf geführte geringe Menge an Flüssigkeit – beispielsweise Wasser oder gegebenenfalls Natriumsilikatlösung – in einer Weise aufbereitet, dass die Feinanteile des eingesetzten Sandes an die Oberfläche des Filterbettes geschwemmt werden und somit eine hinreichend wirksame Filterschicht ausbilden.

Erfindungsgemäss wird ferner der zur Filtration verwendete Sand des Filterbettes anschliessend in das Verfahren zurückgeführt und so – einschliesslich der diesem Sand anhaftenden Natriumsilikatlösung – für die nachfolgende Umsetzung erneut eingesetzt. Dementsprechend wird die noch heisse, unter Druck stehende Natronwasserglaslösung auf das Sandbettfilter aufgegeben, da hierbei der Sand für die nachfolgende Umsetzung bereits vorgeheizt und der Wärmegehalt der heissen Wasserglaslösung in energiesparender Weise optimal genutzt wird. Auf diese Weise können einerseits die nach den gebräuchlichen Verfahren unumgängliche Beseitigung des Filtermaterials entfallen sowie andererseits beträchtliche Energiemengen im Rahmen der gesamten Verfahrensführung eingespart werden.

Im Sinne der Erfindung ist es besonders bevorzugt, die Umsetzung mit einem Überschuss an Sand von 100 bis 200%, bezogen auf die Molverhältnisse von $SiO_2 : Na_2O$ im Ansatz, sowie bei Temperaturen im Bereich von 170 bis 200°C und den diesen Temperaturen entsprechenden Drücken von gesättigtem Wasserdampf durchzuführen. Die Einhaltung dieser Reaktionsbedingungen im Rahmen des erfindungsgemässen Verfahrens führt einerseits zu Natronwasserglaslösungen mit relativ hohen $SiO_2$-Konzentrationen und erfordert andererseits – aufgrund der vergleichsweise niederen Reaktionstemperaturen – nur einen geringen Energiebedarf.

In den nachfolgenden Beispielen, die – soweit nicht anders vermerkt – in der vorstehend beschriebenen Weise durchgeführt wurden, wird die Auswirkung des erfindungsgemässen Verfahrens hinsichtlich Reaktionsdauer und erforderlichen Reaktionstemperaturen anhand von Daten aufgezeigt.

Vergleichsbeispiel 1

Die nachstehenden Vergleichsbeispiele wurden in der herkömmlichen Art und Weise eines hydrothermalen Aufschlusses von Sand mit wässriger Natronlauge – das heisst ohne den erfindungsgemässen Sandüberschuss – durchgeführt und die gebildete Natriumsilikatlösung anschliessend nach dem üblichen Filtrierverfahren behandelt. Als Reaktionsgefäss wurde ein waagerecht angeordneter zylindrischer Druckbehälter mit einem Leervolumen von 340 cm³ verwendet, der um seine horizontale Achse drehbar gelagert war. Die Beheizung desselben erfolgte indirekt mit Hilfe eines Glycerinbades.

| Füllmenge, insgesamt | 170 g |
| Sand | 62,1 g |
| Natronlauge (50gew.-%ig) | 78,7 g |
| Wasser | 29,2 g |
| Laugenkonzentration: | 36,5 Gew.-% |
| Reaktionstemperatur: | 170°C |

Ergebnis

| Reaktionszeit (Stunden) | Gelöster Sand (%) | $SiO_2/Na_2O$-Verhältnis der Natriumsilikatlösung |
|---|---|---|
| nach 3 | 73,1 | 1,49 : 1 |
| nach 4 | 80,4 | 1,63 : 1 |
| nach 8 | 89,5 | 1,82 : 1 |

Dieses Beispiel zeigt, dass bei Anwendung einer relativ niederen Reaktionstemperatur sehr lange Reaktionszeiten zur Umsetzung des eingesetzten Sandes erforderlich sind, wobei der Anteil des nicht umgesetzten Sandes bei dem herkömmlichen Filtrationsverfahren die vorstehend erläuterten Nachteile bedingt.

Vergleichsbeispiel 2

Dieses Beispiel wurde unter den in Vergleichsbeispiel 1 angegebenen Bedingungen – jedoch bei höheren, unterschiedlichen Reaktionstemperaturen – durchgeführt. Es resultierten die folgenden Ergebnisse:

a) Reaktionstemperatur: 200°C

| Reaktionszeit (Stunden) | Gelöster Sand (%) | $SiO_2/Na_2O$-Verhältnis der Natriumsilikatlösung |
|---|---|---|
| nach 3 | 98,9 | 2,01 : 1 |
| nach 4 | 99,5 | 2,02 : 1 |
| nach 8 | 100 | 2,03 : 1 |

b) Reaktionstemperatur: 225 °C

| Reaktions-zeit (Stunden) | Gelöster Sand (%) | $SiO_2/Na_2O$-Verhältnis der Natriumsilikat-lösung |
|---|---|---|
| nach 3 | 99,9 | 2,01 : 1 |
| nach 4 | 100 | 2,02 : 1 |
| nach 8 | 100 | 2,03 : 1 |

Die vorstehenden Ergebnisse zeigen, dass die hydrothermale Herstellung von Natronwasserglas gemäss dem Stand der Technik erst bei einer beträchtlichen Steigerung der Reaktionstemperaturen zu einer vollständigen Umsetzung des eingesetzten Sandes in technisch vertretbaren Reaktionszeiten führt.

Beispiel 1

Zur Durchführung dieses erfindungsgemässen Beispiels wurde der auch in den Vergleichsbeispielen 1 und 2 verwendete Reaktionsbehälter eingesetzt.

| Füllmenge, insgesamt | 170 g |
|---|---|
| Sand | 72,9 g |
| Natronlauge (50gew.-%ig) | 41,6 g |
| Wasser | 55,5 g |
| Laugenkonzentration: | 22 Gew.-% |
| Sandüberschuss: | 175% |
| Reaktionstemperatur: | 170 °C |
| Reaktionsdauer: | 60 Minuten |

Die nach der angegebenen Reaktionsdauer gebildete Natriumsilikatlösung wurde über ein Sandbettfilter unter Verwendung des nicht umgesetzten Sandüberschusses filtriert.

Ergebnis

Es resultierte eine Natriumsilikatlösung mit einem Gewichtsverhältnis $SiO_2/Na_2O$ von 1,63 : 1 und einer $SiO_2$-Konzentration von 19,3 Gewichtsprozent. Somit wurde bereits nach einer Reaktionsdauer von nur einer Stunde eine Natriumsilikatlösung erhalten, die sich – bei gleicher Reaktionstemperatur, jedoch höherer Laugenkonzentration – gemäss Vergleichsbeispiel 1 erst nach vier Stunden bildet.

Beispiel 2

Die Durchführung dieses Beispiels erfolgte analog Beispiel 1 in grosstechnischem Massstab. Als Reaktionsgefäss diente ein waagerecht angeordneter zylindrischer Druckbehälter mit einem Leervolumen von 24 m³, der um seine horizontale Achse drehbar gelagert war. Die Beheizung wurde hierbei durch direktes Einleiten von gesättigtem Wasserdampf in den Druckbehälter vorgenommen. Die Drehzahl des rotierenden Reaktors betrug 6 Umdrehungen pro Minute.

| Füllmenge, insgesamt | 17,3 t |
|---|---|
| Sand | 8,7 t |
| Natronlauge (50gew.-%ig) | 5,0 t |
| Wasser | 3,6 t |
| Laugenkonzentration: | 24 Gew.-% |
| Sandüberschuss: | 185% |
| Reaktionstemperatur: | 170 °C |
| Reaktionsdauer: | 90 Minuten |

Die nach der angegebenen Reaktionsdauer gebildete Natriumsilikatlösung wurde über ein Sandbettfilter unter Verwendung des nicht umgesetzten Sandüberschusses filtriert.

Ergebnis

Es resultierte eine Natriumsilikatlösung mit einem Gewichtsverhältnis $SiO_2/Na_2O$ von 1,49 : 1 und einer $SiO_2$-Konzentration von 18,3 Gewichtsprozent. Wie dieses Beispiel zeigt, lässt sich das erfindungsgemässe Verfahren auch in grosstechnischem Massstab mit Vorteil zur hydrothermalen Herstellung von Natronwasserglas einsetzen, wobei unter Anwendung relativ niedriger Reaktionstemperaturen in vergleichsweise kurzen Reaktionszeiten Natriumsilikatlösungen gebildet werden, die einerseits aufgrund des erzielten Umsetzungsgrades der eingesetzten Rohstoffe eine hohe $SiO_2$-Konzentration aufweisen und die sich andererseits mit Hilfe des erfindungsgemässen Sandbettfilters problemlos reinigen lassen.

**Patentansprüche**

1. Verfahren zur hydrothermalen Herstellung von Natriumsilikatlösung mit einem Gewichtsverhältnis $SiO_2 : Na_2O$ von 1 bis 2,8 : 1 durch Umsetzung von Sand mit wässriger Natriumhydroxidlösung unter Druck und bei erhöhten Temperaturen sowie nachfolgender Filtration, wobei man
a) wässrige Natriumhydroxidlösung einer Konzentration von 20 bis 30 Gew.-%
b) mit einem Überschuss an Sand von bis zu 300%, bezogen auf die Molverhältnisse von $SiO_2 : Na_2O$ im Ansatz,
c) bei Temperaturen im Bereich von 170 bis 250 °C und den diesen Temperaturen entsprechenden Drücken von gesättigtem Wasserdampf
d) in einem rotierenden zylindrischen Druckbehälter, der um seine horizontale Achse drehbar gelagert ist, umsetzt und anschliessend
e) die gebildete, noch unter Druck stehende oder auf Normaldruck entspannte Natriumsilikatlösung auf ein Sandbettfilter ausserhalb des Reaktionsbehälters überführt und dabei
f) den nicht umgesetzten Sandüberschuss vollständig oder teilweise, gegebenenfalls im Gemisch mit überschüssigem Sand aus einer der vorangegangenen Umsetzungen oder frischem Sand, als Filtermedium verwendet,
g) die zu filtrierende, noch heisse Natriumsilikatlösung auf das Sandbettfilter aufgibt
h) und den zur Filtration verwendeten Sand anschliessend in das Verfahren zurückführt.

2. Verfahren nach Anspruch 1, dadurch gekennzeichnet, dass man die Umsetzung mit einem Überschuss an Sand von 100 bis 200% durchführt.

3. Verfahren nach Anspruch 1, dadurch gekennzeichnet, dass man die Umsetzung bei Temperaturen im Bereich von 170 bis 200°C und den diesen Temperaturen entsprechenden Drücken von gesättigtem Wasserdampf durchführt.

## Claims

1. A process for the hydrothermal production of sodium silicate solutions, in which the ratio by weight of $SiO_2$ to $Na_2O$ is 1 to 2.8:1, by reaction of sand with aqueous sodium hydroxide solution under pressure and at elevated temperature, followed by filtration, wherein
a) aqueous sodium hydroxide solution having a concentration of 20 to 30% by weight is reacted with
b) an excess of sand of up to 300%, based on the molar ratios of $SiO_2$ to $Na_2O$ in the mixture,
c) at temperatures in the range from 170 to 250°C and at the saturated steam pressures corresponding to those temperatures,
d) the reaction being carried out in a rotating cylindrical pressure vessel which is mounted for rotation about its horizontal axis, after which
e) the sodium silicate solution formed, which is still under pressure or has been expanded to normal pressure, is transferred to a sand bed filter outside the reaction vessel in which
f) the unreacted excess sand is used completely or partly as filter medium, optionally in admixture with excess sand from one of the preceding reactions or with fresh sand,
g) the still hot sodium silicate solution to be filtered is applied to the sand bed filter and
h) the sand used for filtration is subsequently returned to the process.

2. A process as claimed in claim 1, characterized in that the reaction is carried out with an excess of sand of 100 to 200%.

3. A process as claimed in claim 1, characterized in that the reaction is carried out at temperatures in the range from 170 to 200°C and at saturated steam pressures corresponding to those temperatures.

## Revendications

1. Procédé pour la production hydrothermale de solutions de silicate de sodium ayant un rapport pondéral $SiO_2:Na_2O$ de 1 à 2,8:1, par réaction de sable avec une solution aqueuse d'hydroxyde de sodium sous pression et à des températures élevées avec filtration consécutive, dans lequel on fait réagir
a) une solution aqueuse d'hydroxyde de sodium d'une concentration de 20 à 30% en poids avec
b) un excès de sable allant jusqu'à 300%, par rapport aux rapports molaires $SiO_2:Na_2O$ dans la charge,
c) à des températures dans l'intervalle de 170 à 250°C et sous des pressions de vapeur d'eau saturante correspondant à ces températures,
d) dans un récipient à pression cylindrique rotatif qui est monté en rotation autour de son axe horizontal, et ensuite
e) on fait passer la solution de silicate de sodium formée, encore sous pression ou détendue à la pression normale, sur un filtre à lit de sable à l'extérieur du récipient de réaction, et simultanément
f) on utilise totalement ou partiellement comme milieu filtrant l'excès de sable qui n'a pas réagi, éventuellement en mélange avec du sable en excès de l'une des réactions précédentes ou du sable frais,
g) on verse la solution de silicate de sodium encore chaude à filtrer sur le filtre à lit de sable et
h) on renvoit ensuite dans le procédé le sable utilisé pour la filtration.

2. Procédé selon la revendication 1, caractérisé en ce qu'on exécute la réaction avec un excès de sable de 100 à 200%.

3. Procédé selon la revendication 1, caractérisé en ce qu'on exécute la réaction à des températures dans l'intervalle de 170 à 200°C et sous des pressions de vapeur d'eau saturante correspondant à ces températures.

Fig. 1.